# EUROPEAN PATENT SPECIFICATION

(11) **EP 1 889 885 B1**
(45) Date of publication and mention of the grant of the patent: **24.03.2010**
(21) Application number: 07113800.2
(22) Date of filing: 03.08.2007
(51) Int. Cl.: C09D 11/00

(54) **Ink-jet ink, method for preparing the ink-jet ink, ink cartridge containing the ink-jet ink, image forming method using the ink-jet ink, and image formed with the ink-jet ink**
Tintenstrahltinte, Verfahren zur Herstellung derselben, Tintenpatrone, Tintenstrahlbildaufzeichnungsverfahren und Bild
Encre pour impression par jet d'encre, procédé pour sa préparation, cartouche d'encre, méthode pour former des images par jet d'encre, et image

(30) Priority: 04.08.2006 JP 2006212887; 09.08.2006 JP 2006216717
(43) Date of publication of application: 20.02.2008
(73) Proprietor: Ricoh Company, Ltd., Tokyo 143-8555 (JP)
(72) Inventor: Natori, Yuji Ricoh Company, Ltd., Tokyo 143-8555 (JP); Taniguchi, Keishi Ricoh Company, Ltd., Tokyo 143-8555 (JP); Hakiri, Minoru Ricoh Company, Ltd., Tokyo 143-8555 (JP); Hosogi, Yasuyuki Ricoh Company, Ltd., Tokyo 143-8555 (JP); Hatada, Shigeo Ricoh Company, Ltd., Tokyo 143-8555 (JP); Hasegawa, Shinn Ricoh Company, Ltd., Tokyo 143-8555 (JP)
(74) Representative: Barz, Peter

(56) References cited:
- EP-A1- 1 085 059
- WO-A-03/044103
- JP-A- 10 298 467

## Description

### Field of the Invention

The present invention relates to an ink-jet ink for use in ink-jet printers. In addition, the present invention also relates to a method for preparing the ink-jet ink, an ink cartridge containing the ink-jet ink, an image forming method using the ink-jet ink, and an image formed with the ink-jet ink.

### Discussion of the Background

An ink in which a water-soluble dye is dissolved in water or a mixture of water and a water-sol uble solvent has been mainly used for ink-jet recording methods.

However, there is a problem that an image printed by such a dye-based ink on a recording material has poor water resistance. If water spills on the image, the dye easily smears. There is another problem that the image has poor light resistance. When the image is exposed to light, the color tone tends to change and the image density tends to decrease.

In attempting to solve the above problems of the dye-based ink, a pigment-based ink in which a carbon black or an organic pigment is used instead of dyes is proposed for use in ink-jet recording methods.

An image printed by the pigment-based ink on a recording material has good water resistance. The pigment does not smear even if water spills on the image after the ink is dried.

In addition, the pigment-based ink has better light resistance compared to the dye-based ink because pigment have less reactivity to light compared to dyes.

The pigment-based ink is typically prepared as follows. At first, a mixture including a pigment, a liquid medium, and a dispersant is subjected to a dispersion treatment using a dispersing machine such as a ball mill and a sand mill, to prepare a pigment dispersion liquid. Various additives are optionally added to the pigment dispersion liquid, if desired. Thus, the pigment-based ink is prepared. In view of preventing the occurrence of nozzle clogging of ink-jet printers, and ensuring sharpness, secondary color reproducibility, and transparency of the printed image, pigment particles included in the pigment dispersion liquid need to have a particle diameter of not greater than 200 nm. It is known that when the pigment particles have a particle diameter of not greater than 100 nm, images having better color saturation and transparency can be obtained. It is known that when the pigment particles have a particle diameter of not greater than 50 nm, properties of the ink is close to those of the dye-based ink, and therefore images having better color saturation and transparency can be obtained.

For example, a pigment-based ink in which particles of a quinacridone pigment, which is mainly used as a magenta pigment, are finely dispersed can produce images having good color saturation to some extent. However, these images have poorer color saturation than images printed by a dye-based ink.

In attempting to enhance color saturation of the image produced by the pigment-based ink, published unexamined Japanese Patent Application No. (hereinafter referred to as JP-A) 10-130558 discloses an ink including a fluorescent pigment in an amount of from 0.1 to 3% by weight based on total amount of the ink. It is disclosed therein that the ink can increase the color saturation in an amount of about 5%.

However, the fluorescent pigment dispersed together with a typical pigment has very unstable dispersibility in the ink. When an image is printed by an ink-jet printer using such an ink, image bending is observed in the resultant image. When such an ink is set in a piezo ink-jet printer and left for one month, the ink becomes clogged and cannot be supplied to print an image.

In attempting to enhance color saturation of the image produced by the magenta pigment-based ink, JP-A 10-298467 discloses an ink including an aqueous suspension of polymer particles to which a colorant mixture, in which a colorant having no fluorescence and a colorant having fluorescence are mixed at a specific weight ratio, is adsorbed.

It is described therein that such an ink improves water resistance and printing qualities, such as printing density, color tone, and color saturation, of the printed image. While the results showing the improvements in printing density and lightness of color are disclosed in Examples, no mentioned is made of the improvement in color saturation in Examples. Therefore, it is not clear whether the ink disclosed therein improves color saturation or not.

In addition, it is a natural result that the inks disclosed in Example produces images having higher printing density than those disclosed in Comparative Examples, because the amount (i.e., adsorption amount) of the colorant mixture adsorbed to the polymer particles of Examples are larger than those of Comparative Examples.

Therefore, it should be considered that the claim is not proved that the ink including an aqueous suspension of polymer particles to which a colorant mixture, in which a colorant having no fluorescence and a colorant having fluorescence are mixed at a specific weight ratio, is adsorbed improves color saturation and printing density of the printed image.

The color tone of an image can be tuned by varying the ink composition (e.g., pigment density, added amount of penetrant or humectant) or the kind of the ink receptor (e.g., paper). When the color tone of the above ink is tuned, aqueous suspensions of polymer particles to each of which a colorant mixture, in which a colorant having no fluorescence and a colorant having fluorescence are mixed at various ratio, is adsorbed have to be prepared. Among these aqueous suspensions, the best one is selected. This method is very complicated and not economical.

### SUMMARY OF THE INVENTION

Accordingly, an object of the present invention is to provide an ink-jet ink having a good combination of the following properties:
(1) producing images with good color saturation, image density and water resistance, and without image bending;
(2) easy to control the color tone;
(3) produced at low cost; and
(4) stably discharged from the nozzle.

Another object of the present invention is to provide a method for preparing the ink-jet ink, an ink cartridge containing the ink-jet ink, an image forming method using the ink-jet ink, and an image formed with the ink-jet ink.

These and other objects of the present invention, either individually or in combinations thereof, as hereinafter will become more readily apparent canbe attained by an ink-jet ink, comprising:
a pigment;
a dispersant;
a water;
a particulate resin (A) dyed with a fluorescent dye and having an average particle diameter of from 50 to 200 nm; and
an emulsion of a self-emulsifiable polyurethane; and a method for preparing the ink-jet ink, an ink cartridge containing the ink-jet ink, an image forming method using the ink-jet ink, and an image formed with the ink-jet ink.

### DETAILED DESCRIPTION OF THE INVENTION

Generally, the present invention provides an ink-jet ink including a pigment, a dispersant, a water, a particulate resin (A) dyed with a fluorescent dye and having an average particle diameter of from 50 to 200 nm, and an emulsion of a self-emulsifiable polyurethane.

The particulate resin (A) has an average particle diameter of from 50 to 200 nm. When the average particle diameter is too small, the fluorescence intensity decreases, resulting in deterioration of color saturation of the resultant image. When the average particle diameter is too large, the ink cannot be stably discharged from the nozzle.

Further, the particulate resin (A) preferably has an average particle diameter of from 70 to 150 nm. In this case, the occurrence of diffuse reflection by the pigment particles can be prevented, and therefore images having uniform density can be provided.

The particulate resin (A) can be prepared by known methods such as a method disclosed in JP-A 2001-181544, for example.

The method for preparing an ink-jet ink of the present invention includes:
adding an aqueous emulsion of a self-emulsifiable polyurethane to a pigment dispersion comprising a pigment, a dispersant, and a water, to prepare a first mixture;
agitating the first mixture (preferably for 10 minutes or more);
adding a particulate resin (A) dyed with a fluorescent dye and having an average particle diameter of from 50 to 200 nm to the first mixture, to prepare a second mixture;
agitating the second mixture (preferably for 10 minutes or more); and
optionally adding an additive selected from the group consisting of a humectant, a surfactant, an antifoaming agent, a smear prevention agent, a pH buffering agent, and an antiseptic agent,

The pigment dispersion is prepared as follows:
pre-mixing the pigment, the water, and the dispersant; and
subjecting the mixture to a dispersing treatment using a disperser such as a sand mill and a DYNO-MILL

When the aqueous solution of a self-emulsifiable polyurethane is added to the thus prepared pigment dispersion in the above-mentioned order, the pigment is prevented from aggregating and stably dispersed. The resultant ink has stable viscosity.

When the ink is not prepared by the above method, the pigment is unstably dispersed in the ink liquid. When the ink is prepared by the above method, it is considered that the polyurethane adsorbs to the pigment, and then the particulate resin (A) dyed with a fluorescent dye further adsorbs to the polyurethane. Therefore, the particulate resin (A) dyed with a fluorescent dye and the pigment are prevented from aggregating and stably dispersed.

The ink-j et ink of the present invention preferably includes the particulate resin (A) dyed with a fluorescent dye in an amount of from 0,1 to 40.0% by weight, and more preferably from 0.5 to 25.0% by weight, on a solid basis. When the amount is too small, color saturation of the resultant image cannot satisfactorily increase. When the amount is too large, stability and color tone of the ink deteriorate. When the amount is from 0.1 to 40.0% by weight, the pigment particles are much more stably dispersed in the ink. Therefore, the droplets of the discharged ink are uniformly formed, resulting in improving color saturation of the resultant image.

The self-emulsifiable polyurethane for use in the ink-jet ink of the present invention is preferably anionic.

Emulsions of a polyurethane resin are classified into an emulsion in which a typical polyurethane resin, which is relatively hydrophilic, is emulsified using an emulsifier; and a self-emulsifiable emulsion in which a resin to which a functional group having a function of emulsifier is introduced by means of copolymerization etc. is self-emulsified. Among these, an anionic self-emulsifiable polyurethane emulsion constantly has dispersing stability when used in combination with a pigment, a dispersant, etc.

From the aspect of adherence and dispersing stability of the pigment, the polyurethane resin is preferably an ether type than a polyester type or a polycarbonate type.

When the self-emulsifiable polyurethane is not anionic, stability of the ink liquid deteriorates.

The ink-jet ink of the present invention preferably includes the polyurethane in an amount of from 0.01 to 7% by weight on a solid basis. When the amount is too small, too small amount of the polyurethane adsorbs to the pigment. Therefore, the pigment particles tend to aggregate, resulting in increase of viscosity of the ink. When the amount is too large, the polyurethane particles tends to adhere with each other, resulting in deterioration of stability of the ink.

The polyurethane for use in the ink-jet ink of the present invention preferably has an average particle diameter of not greater than 50 nm. When the average particle diameter is too large, the polyurethane particles tend to precipitate in the ink.

The pigment for use in the ink-j et ink of the present invention preferably has an average particle diameter of from 10 to 200 nm, and more preferably from 20 to 100 nm. When the average particle diameter is too small, preservation stability of the ink deteriorates. In addition, it takes a longtime to prepare a pigment having too small an average particle diameter. When the average particle diameter is too large, nozzle clogging tends to occur, resulting in deterioration of discharging stability of the ink.

The ink-jet ink of the present invention preferably includes the pigment in an amount of from 1 to 15% by weight, and more preferably from 3 to 12% by weight. When the amount is too small, the resultant image density deteriorates. When the amount is too large, nozzle clogging tends to occur, resulting in deterioration of discharging stability of the ink.

In the present invention, the average particle diameter of the pigment, the particulate resins (A) and (A'), and the polyurethane are measured by MICROTRAC® UPA (from Nikkiso Co., Ltd.). The average particle diameter is defined as the particle diameter of a point at which the ratio (%) by volume is 50% in a volume cumulative curve showing the relationship between the particle diameter on the X-axis and the ratio (%) by volume on the Y-axis.

The particle diameter distribution is determined by the so-called dynamic light scattering method in which particles performing Brownian movement in an ink are irradiated with a laser light beam, and then the variation in frequency of a light beam (i.e., backscattering light beam) reflected from the particles is measured.

The dispersing agent for use in the ink-j et ink of the present invention is preferably a surfactant. In this case, the ink is prevented from bubbling, and produces images having high color saturation.

As the surfactant., anionic, nonionic, cationic, and ampholytic surfactants can be used.

Specific examples of the anionic surfactants include, but are not limited to, fatty acid salts, alkyl sulfates, alkyl aryl sulfonates, alkyl naphthalene sulfonates, dialkyl sulfonates, dialkyl sulfosuccinates, alkyl diaryl ether disulfonate, alkyl phosphates, polyoxyethylene alkyl ether sulfates, polyoxyethylene alkyl aryl ether sulfates, naphthalene sulfonic acid formalin condensates, polyoxyethylene alkyl phosphates, glycerol borate fatty acid esters, and polyoxyethylene glycerol fatty acid esters.

Specific examples of the nonionic surfactants include, but are not limited to, polyoxyethylene alkyl ethers, polyoxyethylene alkyl aryl ethers, polyoxyethylene oxypropylene block copolymers, sorbitan fatty acid esters, polyoxyethylene sorbitan fatty acid esters, polyoxyethylene sorbitol fatty acid esters, glycerin fatty acid esters, polyoxyethylene fatty acid esters, polyoxyethylene alkylamine, fluorine surfactants, and silicon surfactants.

Specific examples of the cationic surfactants include, but are not limited to, alkylamine salts, quaternary ammonium salts, alkyl pyridinium salts, and alkyl imidazolium salts.

Specific examples of the ampholytic surfactants include, but are not limited to, alkyl betaine, alkylamine oxide, and phosphatidylcholine.

Among these, nonionic surfactants are preferably used. In particular, the compound having the following formula (I) is more preferably used, and POE (n=40) β-naphthyl ether is most preferably used: 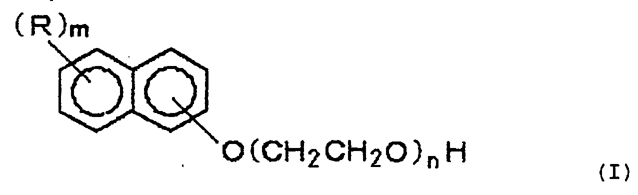 wherein R represents an alkyl, aryl, or an aralkyl group having 1 to 20 carbon atoms, m represents an integer of from 0 to 7, and n represents an integer of from 20 to 200.

The ink-jet ink of the present invention may include an alkanediol and/or an acetylene glycol surfactant. In this case, the ink is prevented from bubbling, and produces images having high color saturation.

The ink-jet ink of the present invention preferably includes the alkanediol in an amount of from 0.2 to 15% by weight, and more preferably from 0.3 to 10% by weight. When the amount is too small, color saturation of the resultant image deteriorates. When the amount is too large, preservation stability of the ink deteriorates.

Specific examples of the alkanediols incl ude, but are not limited to, 1,2-hexanediol, 1,2-heptanediol, 1,3-heptanediol, 2-methyl-1,3-hexanediol, 2-butyl-2-ethyl-propanediol, and 2-ethyl-1,3-hexanediol,

When the ink-jet ink of the present invention includes the acetylene glycol surfactant, color saturation of the resultant image much more increases.

The ink-jet ink of the present invention preferably includes the acetylene glycol surfactant in an amount of from 0.1 to 12% by weight, and more preferably from 0.1 to 5% by weight.

Specific examples of the acetylene glycol surfactants include, but are not limited to,
2,4,7,9-tetramethyl-5-decin-4,7-diol,
3,6-dimethyl-4-octine-3,6-diol, and
3,5-dimethyl-1-hexin-3-ol, Specific examples of useable commercially available acetylene glycol surfactants include, but are not limited to, SURFYNOL® 104, 82, 465, 485, and TG (from Air Products and Chemicals, Inc.); and OLFINE® STG and E1010 (from Nissin Chemical Industry Co., Ltd.),

As the fluorescent dye for use in the present invention, basic dyes (including cathilon dyes), direct dyes, and fluorescent brightening dyes can be used, but is not limited thereto. In particular, a daylight fluorescent dye, a mixture of two or more fluorescent dyes, and a mixture of a daylight fluorescent dye and a normal dye (having no fluorescence) are preferably used.

Specific examples of the fluorescent dyes include, but are not limited to, C. I. (Color Index) Basic Yellow 1, Basic Yellow 40, Basic Red 1, Basic Red 13, Basic Violet 7, Basic Violet 10, Basic Orange 22, Basic Blue 7, Basic Green 1, Direct Yellow 85, Direct Orange 8, Direct Red 9, Direct Blue 22, Direct Green 6, Fluorescent Brightening Agent 55, Fluorescent Brightening Whitex WS 52, Fluorescent 162, and Fluorescent 112. Among these, Basic Yellow 40, Basic Red 1, Basic Violet 10, and Fluorescent Brightening Whitex WS 52 are preferably used.

A particulate resin is dyed with the above dye at a time or after emulsion-polymerized. The emulsion polymerization is preferably performed under atmospheric pressure or increased pressure at a temperature of 40 to 110°C, and agitation for 1 to 5 hours. The resultant polymer preferably includes the dye in an amount of from 0.01 to 10 parts by weight, and more preferably from 0.1 to 5 parts by weight based on 100 parts by weight of the polymer, on a solid basis.

The ink-j et ink of the present invention includes a pigment as a colorant.

Specific examples of the pigments for use in magenta inks include, but are not limited to, C. I. Pigment Red 5, 7, 12, 48 (Ca), 48 (Mn), 57 (Ca), 57:1, 112, 122, 123, 146, 168, 176, 184, 185, 202, and 209, and Pigment Violet 19.

In the present invention, pigments which can be stably dispersed without a dispersant such as a self-dispersible pigment (i.e., surface-treated pigment), the surface of which has a water-dispersible group, and a capsulated pigment (i.e., water-dispersible polymer containing pigment), the surface of which is covered with a polymer; and pigments which can be stably dispersed with a dispersant can be used.

The ink-jet ink of the present invention optionally includes a pH buffering agent.

Specific examples of the pH buffering agents include, but are not limited to, aminoethanesulfonic acid, 2-amoinoethanesulfonic acid, 2-aminoethyl sulfate, N-acetyl-L-cysteine, catechol, pyrogallol, o-phenolsulfonic acid, p-phenolsulfonic acid, phloroglucinol, resorcinol, asparagine, arginine, L-allothreonine, ornithine, ornithine hydrochloride, reduced glutathione, oxidized glutathione, glutamine, cystine, cysteine, 3,4-dihydroxyphenylalanine, L-serine, DL-serine, tyrosine, tryptophan, L-threonine, DL-threonine, histidine, phenylalanine, homocystein, DL-methionine, L-methionine, lysine, lysine hydrochloride, 4-aminopyridine, pyridoxal, pyridoxine hydrochloride, morpholine, inosine, uracil, guanine, guanosine, hypoxanthine, purine, N,N-bis(2-hydroxyethyl)-2-aminoethanesulfonic acid, 3-morpholinopropanesulfonic acid, [N-tris(hydroxymethyl)methyl-2-amino]ethanesulfonic acid, N-2-hydroxyethylpiperazine-N' -2-ethanesulfonic acid, piperazine-N-N'-bis(2-hydroxypropane)-3-sulfonic acid, 3-[N-(tris-hydroxymethyl)methylamino]-2-hydroxypropanesulfo nic acid, 3-[N,N-bis(2-hydroxyethyl)amino]-2-hydroxypropanesulfonic acid, N-2'-hydroxyethylpiperazine-N-2-hydroxypropane-3-sulfonic acid, N-2-hydroxyethylpiperazine-N' -2-ethanesulfonic acid, tris(hydroxymethyl)aminomethane, N-[tris(hydroxymethyl)methyl]glycine, glycylglycine, N,N-di(2-hydroxyethyl)glycine, N-[tris(hydroxymethyl)methyl]-3-aminopropanesulfonic acid, diethanolamine, ethanolamine, 2-amino-2-methyl-1,3-propanediol, 2-amino-2-ethyl-1,3-propanediol, 3-[(1,1-dimethyl-2-hydroxyethyl)amino]-2-hydroxypropanesulf onic acid, 2-cyclohexylaminoethanesulfonic acid, N-cyclohexyl-2-hydroxy-3-aminopropanesulfonic acid, and 3-cyclohexylaminopropanesulfonic acid. Among these, 3-[(1,1-dimethyl-2-hydroxyethyl)amino]-2-hydroxypropanesulf onic acid, 2-cyclohexylamanoethanesulfonic acid, N-cyclohexyl-2-hydroxy-3-aminopropanesulfonic acid, and 3-cyclohexylaminopropanesulfonic acid are preferably used.

The ink-jet ink of the present invention preferably includes the pH buffering agent in an amount of from 0.001 to 10% by weight, more preferably from 0.005 to 5% by weight, and much more preferably from 0.05 to 2% by weight. When the amount is too small, the variations in pH cannot be satisfactorily prevented. When the amount is too large, viscosity of the ink is too large.

The present invention provides another ink-jet ink including a particulate resin (A') dyed with a fluorescent dye and having an average particle diameter of from 50 to 130 nm and a quinacridone pigment (B) having an average particle diameter of from 50 to 130 nm, wherein the particulate resin (A') has a color tone selected from yellow, yellow-orange, orange, red-orange, red, pink, cerise, rose, magenta, and a mixture thereof.

When the particulate resin (A') does not have a color tone selected from yellow, yellow-orange, orange, red-orange, red, pink, cerise, rose, magenta, and a mixture thereof, the resultant image has a dirty color even if the image density is high. In this case, magenta images having high color saturation cannot be obtained. In particular, the particulate resin (A') preferably has a color tone having a wavelength of 580 nm or more, and more preferably from 590 to 650 nm.

The particulate resin (A') preferably has an average particle diameter of from 50 to 130 nm. When the average particle diameter is too small, the fluorescence intensity decreases, resulting in deterioration of color saturation of the resultant image. When the average particle diameter is too large, the ink cannot be stably discharged from the nozzle.

The quinacridone pigment (B) preferably has an average particle diameter of from 50 to 130 nm. When the average particle diameter is too small, it is difficult to disperse the pigment and preservation stability of the ink deteriorates. When the average particle diameter is too large, nozzle clogging tends to occur, resulting in deterioration of discharging stability of the ink.

The quinacridone pigment (B) can be obtained by dispersing a quinacridone pigment such as quinacridone, dimethylquinacridone, and dichloroquinacridone, by a typical method. These quinacridone pigments are low in cost. In addition, the color tone of the ink can be easily controlled by varying the added amounts of the particulate resin (A') and the quinacridone pigment (B).

In the ink-jet ink of the present invention, the weight ratio (A' /B) of the particulate resin (A') to the quinacridone pigment (B) is preferably from 1/2 to 8/1. When the ratio of the quinacridone pigment (B) is too large, color saturation of the resultant image cannot satisfactorily increase. When the ratio of the particulate resin (A') is too large, the resultant image density deteriorates and the magenta color tone is unnatural because the fluorescence is too strong.

The particulate resin (A') preferably has a particle diameter distribution such that a standard deviation is not greater than 40 nm. When the standard deviation is too large, the number of coarse particles increases, resulting in deterioration of discharging stability of the ink.

The particulate resin (A') preferably has at least one monomer unit selected fromstyrene, acrylonitrile, acrylic acid, and methacrylic acid. A polymer including the above units has good dyeing property, and therefore the resultant image has high image density.

The quinacridone pigment (B) is at least one member selected from quinacridone, dimethylquinacridone, and dichloroquinacridone. Other quinacridone pigments are high in cost, and cannot provide good magenta color tone.

The ink-jet ink of the present invention preferably includes the particulate resin (A') and the quinacridone pigment (B) in a total amount of from 5 to 20% by weight. When the total amount is too small, the resultant image density is low. When the total amount is too large, nozzle clogging tends to occur.

In the ink-jet ink of the present invention, the quinacridone pigment (B) is preferably dispersed by a dispersant. In this case, the ink can be prepared at a low cost. A self-dispersible pigment (i.e., surface-treated pigment), the surface of which has a water-dispersible group, which can be stably dispersed without a dispersant is high in cost.

In the ink-jet ink of the present invention, the quinacridone pigment (B) is preferably dispersed by a nonionic surfactant. The nonionic surfactant is low in cost. In addition, an ink including the nonionic surfactant has good preservation stability when used in combination with various additives.

In the ink-jet ink of the present invention, the quinacridone pigment (B) is preferably dispersed by a POE naphthyl ether, and more preferably that including EO in an amount of from 12 to 60 mol. The POE naphthyl ether has a naphthyl group which strongly binds to the quinacridone pigment. Therefore, dispersing stability of the quinacridone increases, When the amount of EO is too small, dispersing stability of the pigment decreases . When the amount of EO is too large, viscosity of the ink increases.

In the ink-jet ink of the present invention, the quinacridone pigment (B) is preferably dispersed by an anionic surfactant. The anionic surfactant is low in cost, In addition, an ink including the anionic surfactant has good dispersing stability.

In the ink-jet ink of the present invention, the quinacridone pigment (B) is preferably dispersed by an alkali salt of a POE naphthyl ether phosphate, and more preferably that including EO in an amount of from 5 to 60 mol and the alkali metal is at least one member selected from Li, Na, and K.

The alkali salt of a POE naphthyl ether phosphate has a naphthyl group which strongly binds to the quinacridone pigment. Therefore, dispersing stability of the quinacridone increases. In addition, the alkali salt part prevents the dispersed pigment particles from aggregating, resulting in increasing dispersing stability of the pigment.

When the amount of EO is too small, dispersing stability of the pigment decreases. When the amount of EO is too large, viscosity of the ink increases.

When the alkali metal is at least one member selected from Li, Na, and K, the ink can be prepared at a low cost. In addition, an ink including such an alkali salt has good preservation stability when used in combination with various additives.

In the ink-jet ink of the present invention, the weight ratio (B/dispersant) of the quinacridone pigment (B) to the dispersant is preferably from 1/1 to 1/0.1. When the weight ratio (B/dispersant) is too large, viscosity of the ink increases and preservation stability of the ink deteriorates. When the weight ratio (B/dispersant) is too small, dispersing stability deteriorates.

The particulate resin (A') can be prepared by known methods such as a method disclosed in JP-A 2001-181544, for example.

The quinacridone pigment (B) can be prepared by subjecting a quinacridone pigment to a dispersion treatment using a surfactant disclosed in the present invention. In particular, the quinacridone pigment (B) can be prepared as follows:
pre-mixing a quinacridone pigment, a water, and a dispersant; and
subjecting the mixture to a dispersing treatment using a disperser such as a sand mill and a DYNO-MILL until the resultant particles have a desired average particle diameter.

The thus prepared particulate resin (A') and quinacridone pigment (B) are mixed at a specific ratio, and then a water and/or a water-soluble organic solvent, optionally together with a surfactant, an antiseptic agent, etc., are added thereto. Thus, an ink is prepared.

The water for use in the ink-jet ink of the present invention includes pure waters such as an ion-exchanged water, an ultrafiltrated water, a reverse osmosis water, and a distilled water; and ultrapure waters.

A water sterilized by the irradiation of ultraviolet ray, the addition of hydrogen peroxide, etc. can also be used. An ink using such a sterilized water is prevented from generating molds and bacteria when preserved for a long time.

The ink-jet ink of the present invention may include a water-soluble organic solvent.

Specific examples of the water-soluble organic solvents include, but are not limited to, alkyl alcohols having 1 to 4 carbon atoms (e..g.., methyl alcohol, ethyl alcohol, n-propyl alcohol, isopropylalcohol, n-butylalcohol, sec-butylalcohol, tert-butyl alcohol), amides (e.g., dimethylformamide, dimethylacetamide), ketones and ketone alcohols (e.g., acetone, methyl ethyl ketone, diacetone alcohol), ethers (e.g., tetrahydrofuran, dioxane), polyols (e.g., ethylene glycol, propylene glycol, 1,2-propanediol, 1,2-butanediol, 1,3-bitanediol, 3-methyl-1,3-butanediol, 1,4-butanediol, diethylene glycol, triethylene glycol, 1,2,6-hexanetriol, thiodiglycol, hexylene glycol, glycerin), polyalkylene glycol (e.g., polyethylene glycol, polypropylene glycol), lower alkyl ethers of polyols (e.g., ethylene glycol monomethyl (or ethyl) ether, diethylene glycol methyl (or ethyl) ether, triethylene glycol monomethyl (or ethyl) ether), alkanolamines (e.g., monoethanolamine, diethanolamine, triethanolamine), N-methyl-2-pyrrolidone, 2-pyrrolidone, and 1,3-dimethyl-2-imidazolidinone.

From an environmental viewpoint, the ink-jet ink preferably includes a water-soluble organic solvent in an amount of not greater than 50%.

Further, the ink-jet ink of the present invention may optionally include a pH buffering agent, an antiseptic agent, a resin, etc., if desired.

In the present invention, the average particle diameter and the standard deviation thereof is measured by MICROTRAC® UPA (from Nikkiso Co., Ltd.) .

The ink-jet ink of the present invention can be used for printing methods such as an ink-j et printer having a continuous injection type or on-demand type recording head. Specific examples of the on-demand types include, but are not limited to, piezo type, thermal ink-jet type, and electrostatic type.

Embodiments of an ink cartridge containing the ink-jet ink of the present invention, an ink-jet printer configured to discharge the ink-j et ink of the present invention, and an image forming method using such an ink-jet printer can be easily obtained referring to a related art of the present technical field such as JP-A 2000-198958, for example.

Having generally described this invention, further understanding can be obtained by reference to certain specific examples which are provided herein for the purpose of illustration only and are not intended to be limiting. In the descriptions in the following examples, the numbers represent weight ratios in parts, unless otherwise specified.

### EXAMPLES

### Example 1

A 2-liter flask equipped with a condenser, a thermometer, a 500-ml separating funnel for charging monomers, and a stirrer was set in a water bath.

The flask was charged with 440 ml of water, 8.5 g of sodium dodecylbenzenesulfonate, and 7 g of a nonionic surfactant EMULGEN® LS-110 (from Kao Corporation), and then heated so that the inner temperature was 80°C. Further, 2.1 g of a potassium persulfate were added thereto. Amonomer mixture liquid in which 140 g of acrylonitrile, 120 g of styrene, and 13 g of acrylic acid were mixed was dropped therein from the separating funnel over a period of 3 hours while agitating. The mixture was subjected to a polymerization for 4 hours.

Next, 200 g of water, 0.3 g of rhodamine F3B (BASONYL® RED 560 from BASF Japan Ltd.), 2.0 g of a rhodamine F4G (BASONYL® RED 485 from BASF Japan Ltd.), and 17.5 g of a special polycarboxylic acid-based polymer surfactant (DEMOL® EP from Koa Corporation) were added to the above product while agitating at room temperature. The mixture was uniformly mixed, and then gradually heated. The resultant polymer was dyed for 1 hour at 85°C. Thus, a dispersion of a pink particulate resin having an average particle diameter of 60 nm was prepared. The dispersion was controlled to have a solid content of 40% by weight. Thus, a fluorescent particulate resin dispersion (F) was prepared.

Next, the following components were pre-mixed.

| | |
|---|---|
| Pigment Red 122 | 151 parts |
| (IRGAPHOR MAGENTA DMQ from Ciba Specialty Chemicals) | |
| POE (n=40) β-naphthyl ether | 57 parts |
| Distilled water | 796 parts |

The mixture was subjected to a circular dispersion treatment using a disk-type bead mill (KDL from Shinmaru Enterprise Corporation, media: zirconia ball having a diameter of 0.3 mm) for 20 hours. Thus, a colorant dispersion (A) having an average particle diameter of 63.5 nm was prepared.

Next, 10.0 parts of a self-emulsifiable anionic polyether-based polyurethane emulsion (TAKELAC® W-5025 from Mitsui Takeda Chemicals Inc., having a solid content of 30.0% and an average particle diameter of 20.3 nm) were added to 34.0 parts of the colorant dispersion (A), and then the mixture was agitated for 30 minutes. Thus, a colorant dispersion (B) was prepared.

Next, 30.0 parts of the fluorescent particulate resin dispersion (F) were added to the 44.0 parts of the colorant dispersion (B), and then the mixture was agitated for 30 minutes. Thus, a colorant dispersion (C) was prepared.

Next, the following components were added to the colorant dispersion (C) and agitated for 30 minutes.

| | |
|---|---|
| Glycerin | 5.0 parts |
| Diethylene glycol | 15.0 parts |
| 1-Amino-2-ethyl-2,3-propanediol | 2.0 parts |
| Distilled water | 4.0 parts |

The mixture was fil tered with a membrane filter with pores having a diameter of 0.8 µm, and then vacuum degassed.

Thus an ink (1) was prepared.

### Example 2

The procedure for preparing the ink in Example 1 was repeated except that the amounts of the self-emulsifiableanionic polyether-based polyurethane emulsion (TAKELAC® W-5025 from Mitsui Takeda Chemicals Inc.) was changed to 14.0 parts and the distilled water was changed to 0 parts.

Thus, an ink (2) was prepared.

### Example 3

The procedure for preparing the ink in Example 1 was repeated except that 3 parts of 2-ethyl-1,3-hexanediol were further added and the amount of the distilled water was changed to 8.3 parts.

Thus, an ink (3) was prepared.

### Example 4

The procedure for preparing the ink in Example 1 was repeated except that 0.1 parts of an acetylene glycol-based surfactant (OLFINE® STG from Nissin Chemical Industry Co., Ltd.) were further added and the amount of the distilled water was changed to 11.2 parts.

Thus, an ink (4) was prepared

### Example 5

The procedure for preparing the ink in Example 1 was repeated except that 3 parts of 2-ethyl-1, 3-hexanediol and 0.1 parts of an acetylene glycol-based surfactant (OLFINE® STG from Nissin Chemical Industry Co., Ltd.) were further added and the amount of the distilled water was changed to 11.2 parts.

Thus, an ink (5) was prepared.

### Comparative Example 1

The procedure for preparing the ink in Example 1 was repeated except that 100 parts of the self-emulsifiable anionic polyether-based polyurethane emulsion (TAKELAC® W-5025 from Mitsui Takeda Chemicals Inc.) was replaced with 10.0 parts of distilled water.

Thus, a comparative ink (C1) was prepared.

### Comparative Example 2

The procedure for preparing the ink in Example 1 was repeated except that 10.0 parts of the self-emulsifiable anionic polyether-based polyurethane emulsion (TAKELAC® W-5025 from Mitsui Takeda Chemicals Inc.) was replaced with 10.0 parts of Johnson Polymer JONCRYL® 74J.

Thus, a comparative ink (C2) was prepared.

### Comparative Example 3

The procedure for preparing the ink in Example 1 was repeated except that the pink particulate resin having an average particle diameter of 60 nmwas replaced with that having an average particle diameter of 500 nm.

Thus, a comparative ink (C3) was prepared.

### Comparative Example 4

The procedure for preparing the ink in Example 1 was repeated except that the dispersion of a pink particulate resin was controlled to have a solid content of 0.005% by weight.

Thus, a comparative ink (C4) was prepared.

### Evaluation 1

Each of the inks (1) to (5) and (C1) to (C4) prepared above was set in a piezo ink-jet printer EM-930C (from Seiko Epson Corporation) and a thermal ink-jet printer DESKJET 880C (from Hewlett-Packard Development Company, LP), respectively, and images were printed on a plain paper (X-4024) and a gloss paper (a gloss photo paper from Seiko Epson Corporation).

The image density and color saturation of the image printed on the plain paper by the piezo ink-jet printer EM-930C was measured with a densitometer X-RITE. The color saturation was defined as a distance between the origin point and a chromaticity of a solid image measured with the densitometer X-RITE in the chromaticity diagram.

Next, a test pattern of a solid image having an image proportion of 5% was printed on 200 sheets of an A4-size plain paper by the piezo ink-jet printer EM-930C and the thermal ink-j et printer DESKJET 880C, respectively. The 200^{th} solid image was observed with a loupe to evaluate the number of white line and low-density line caused by image bending.

On the other hand, each of the inks prepared above was set in a piezo ink-jet printer EM-930C and left for 1 month so as to evaluate whether the ink clogging occurs or not

The evaluation results are shown in Table 1.

**Table 1**

| | Initial Stage | | | | 1 Month Later |
|---|---|---|---|---|---|
| | Color Saturation | Image Density | Number of Image Bending | | Ink Clogging |
| | | | EM-930C | DESKJET 880C | |
| Ex. 1 | 64.30 | 1.05 | 0 | 0 | No |
| Ex. 2 | 64.10 | 1.06 | 0 | 0 | No |
| Ex. 3 | 64.30 | 1.03 | 0 | 0 | No |
| Ex. 4 | 64.20 | 1.05 | 0 | 0 | No |
| Ex. 5 | 64.10 | 1.04 | 0 | 0 | No |
| Comp. Ex. 1 | 62.15 | 0.89 | 2 | 1 | Yes |
| Comp. Ex. 2 | 63.00 | 0.85 | 3 | 4 | Yes |
| Comp. Ex. 3 | 63.20 | 1.01 | 6 | 5 | No |
| Comp. Ex. 4 | 52. 70 | 0.85 | 0 | 0 | No |

### Example 6

A 2-liter flask equipped with a condenser, a thermometer, a 500-ml separating funnel for charging monomers, and a stirrer was set in a water bath.

The flask was charged with 440 ml of water, 8.5 g of sodium dodecylbenzenesulfonate, and 7 g of a nonionic surfactant EMULGEN® LS-110 (from Kao Corporation), and then heated so that the inner temperature was 80°C. Further, 2.1g of a potassium persulfate were added thereto. A monomer mixture liquid in which 140 g of acrylonitrile, 120 g of styrene, and 13 g of acrylic acid were mixed was dropped therein from the separating funnel over a period of 3 hours while agitating. The mixture was subjected to a polymerization for 4 hours.

Next, 200 g of water, 0,3 g of rhodamine F3B (BASONYL® RED 560 from BASF Japan Ltd.), 2.0 g of a rhodamine F4G (BASONYL® RED 485 from BASF Japan Ltd.), and 17.5 g of a special polycarboxylic acid-based polymer surfactant (DEMOL® EP from Koa Corporation) were added to the above product while agitating at room temperature. The mixture was uniformly mixed, and then gradually heated. The resultant polymer was dyed for 1 hour at 85°C. Thus, a dispersion of a pink particulate resin having an average particle diameter of 58 nm and a standard deviation of 31 nm was prepared. The dispersion was controlled to have a solid content of 40% by weight. Thus, a fluorescent particulate resin dispersion (f1) was prepared.

Next, the following components were pre-mixed.

| | |
|---|---|
| Pigment Red 122 (dimethylquinacridone) | 150 parts |
| (IRGAPHOR MAGENTA DMQ from Ciba Specialty Chemicals) | |
| POE (n=40) β-naphthyl ether | 37.5 parts |
| Distilled water | 812.5 parts |

The mixture was subjected to a circular dispersion treatment using a disk-type bead mill (KDL from Shinmaru Enterprise Corporation, media: zirconia ball having a diameter of 0.3mm) for 20 hours. Thus, a colorant dispersion (a) having an average particle diameter of 63.5 nm was prepared.

The following components were mixed and agitated for 30 minutes.

| | |
|---|---|
| Fluorescent particulate resin dispersion (f1) | 30 parts |
| Colorant dispersion (a) | 33.3 parts |
| Glycerin | 20 parts |
| 2-Ethyl-1,3-hexanediol | 2 parts |
| PEG fluorinated alkyl monoether | 2 parts |
| (ZONYL FS 300 from DuPont) | |
| 1-Amino-2-ethyl-2, 3-propanediol | 1 parts |
| Distilled water | 11.7 parts |

The mixture was filtered with a membrane filter with pores having a diameter of 0.8 µm, and then vacuum degassed.

Thus an ink (6) was prepared.

### Example 7

The procedure for preparing the fluorescent particulate resin dispersion (f1) in Example 6 was repeated except that 0.3 g of rhodamine F3B (BASONYL® RED 560 from BASF Japan Ltd.) and 2.0 g of a rhodamine F4G (BASONYL® RED 485 from BASF Japan Ltd.) were replaced with 20 g of Basic Yellow 40 (KAYACRYL BRILLIANT YELLOW F2G from Nippon Kayaku Co. , Ltd.), and the amount of the special polycarboxylic acid-based polymer surfactant (DEMOL® EP from Koa Corporation) was changed to 21 g. Thus, a dispersion of a yellow particulate resin having an average particle diameter of 122 nm and a standard deviation of 38 nm was prepared. The dispersion was control led to have a solid content of 40% by weight. Thus, a fluorescent particulate resin dispersion (f2) was prepared.

The following components were mixed and agitated for 30 minutes.

| | |
|---|---|
| Fluorescent particulate resin dispersion (f2) | 8 parts |
| Colorant dispersion (a) | 33.3 parts |
| Glycerin | 20 parts |
| 2-Ethyl-1,3-hexanediol | 2 parts |
| PEG fluorinated alkyl monoether | 2 parts |
| (ZONYL FS 300 from DuPont) | |
| 1-Amino-2-ethyl-2,3-propanediol | 1 parts |
| Distilled water | 33.7 parts |

The mixture was filtered with a membrane filter with pores having a diameter of 0.8 µm, and then vacuum degassed.

Thus an ink (7) was prepared.

### Example 8

The following components were pre-mixed.

| | |
|---|---|
| Pigment Violet 19 (quinacridone) | 150 parts |
| (FASTOGEN SUPER RED 7061B conc, from Dainippon Ink and Chemicals, Incorporated) | |
| POE (n=10) β-naphthyl ether phosphate K | 37.5 parts |
| Distilled water | 812.5 parts |

The mixture was subjected to a circular dispersion treatment using a disk-type bead mill (KDL from Shinmaru Enterprise Corporation, media: zirconia ball having a diameter of 0.3mm) for 20 hours. Thus, a colorant dispersion (b) having an average particle diameter of 83.2 nm was prepared.

The following components were mixed and agitated for 30 minutes.

| | |
|---|---|
| Fluorescent particulate resin dispersion (f1) | 30 parts |
| Colorant dispersion (b) | 12 parts |
| Glycerin | 20 parts |
| 2-Ethyl-1,3-hexanediol | 2 parts |
| PEG fluorinated alkyl monoether | 2 parts |
| (ZONYL FS 300 from DuPont) | |
| 1-Amino-2-ethyl-2,3-propanediol | 1 parts |

The mixture was filtered with a membrane filter with pores having a diameter of 0.8 µm, and then vacuum degassed.

Thus an ink (8) was prepared.

### Comparative Example 5

The procedure for preparing the ink in Example 6 was repeated except that the fluorescent particulate resin dispersion (f1) was replaced with a green fluorescent particulate resin dispersion (LUMIKOL NKW-3202W from Nippon Keiko Kagaku Co., Ltd., having an average particle diameter of 100 nm).

Thus a comparative ink (C5) was prepared.

### Comparative Example 6

The procedure for preparing the ink in Example 6 was repeated except that the fluorescent particulate resin dispersion (f1) was replaced with a pink fluorescent particulate resin dispersion (LUMIKOL NKW-C2117E from Nippon Keiko Kagaku Co., Ltd., having an average particle diameter of 400 mn).

Thus a comparative ink (C6) was prepared.

### Comparative Example 7

The procedure for preparing the colorant dispersion (a) in Example 6 was repeated except that the circular dispersion treatment time was changed to 10 hours. Thus, a colorant dispersion (c) having an average particle diameter of 156.2 nm was prepared.

The procedure for preparing the ink in Example 6 was repeated except that the colorant dispersion (a) was replaced with the colorant dispersion (c),

Thus a comparative ink (C7) was prepared.

### Comparative Example 8

The procedure for preparing the fluorescent particulate resin dispersion (f1) in Example 6 was repeated except that the monomer mixture liquid was dropped in the flask from the separating funnel over a period of 1 hour while gently agitating. Thus, a fluorescent particulate resin dispersion (f3) having an average particle diameter of 126 nm and a standard deviation of 52 nm was prepared.

The procedure for preparing the ink in Example 6 was repeated except that the fluorescent particulate resin dispersion (f1) was replaced with the fluorescent particulate resin dispersion (f3).

Thus a comparative ink (C8) was prepared.

### Comparative Example 9

The procedure for preparing the ink in Example 6 was repeated except that the amounts of the fluorescent particulate resin dispersion (f1) and the colorant dispersion (a) were changed to 5 parts and 40 parts, respectively.

Thus a comparative ink (C9) was prepared.

### Comparative Example 10

The procedure for preparing the ink in Example 6 was repeated except that the amounts of the fluorescent particulate resin dispersion (f1) and the colorant dispersion (a) were changed to 30 parts and 8 parts, respectively.

Thus a comparative ink (C10) was prepared.

### Evaluation 2

Each of the inks (6) to (8) and (C5) to (C10) prepared above was set in a piezo ink-jet printer EM-930C (from Seiko Epson Corporation) and a thermal ink-jet printer DESKJET 880C (from Hewlett-Packard Development Company, LP), respectively, and images were printed on a plain paper (X-4024) .

The image density and color saturation of the image printed on the plain paper by the piezo ink-jet printer EM-930C was measured with a densitometer X-RITE. The color saturation was defined as a distance between the origin point and a chromaticity (i.e., a* value and b* value) of a solid image measured with the densitometer X-RITE in the chromaticity diagram.

Next, a test pattern of a solid image having an image proportion of 5% was printed on 200 sheets of an A4-size plain paper by the piezo ink- jet printer EM-930C and the thermal ink-jet printer DESKJET 880C, respectively. The 200^{th} solid image was observed with a loupe to evaluate the number of white line and low-density line caused by image bending.

The evaluation results are shown in Table 2, and the measured chromaticity are shown in Table 3.

**Table 2**

| | Color Saturation | Image Density | Number of Image Bending | |
|---|---|---|---|---|
| | | | EM-930C | DESKJET 880C |
| Ex. 6 | 64.3 | 1.08 | 0 | 0 |
| Ex. 7 | 63.5 | 1.06 | 0 | 0 |
| Ex. 8 | 63.9 | 1.05 | 0 | 0 |
| Comp. Ex. 5 | 52.8 | 1.10 | 0 | 0 |
| Comp. Ex. 6 | 63.0 | 1.03 | 43 | 27 |
| Comp. Ex. 7 | 53.2 | 1.05 | 9 | 6 |
| Comp. Ex. 8 | 64.1 | 1.08 | 5 | 5 |
| Comp. Ex. 9 | 55.1 | 1.09 | 0 | 0 |
| Comp. Ex. 10 | 59.0 | 0.86 | 0 | 0 |

**Table 3**

| | a* value | b* value |
|---|---|---|
| Ex. 6 | 64.2 | -3.7 |
| Ex. 7 | 63.5 | 2.2 |
| Ex. 8 | 63.8 | 2.7 |
| Comp. Ex. 5 | 40.6 | -33.8 |
| Comp. Ex. 6 | 63.0 | -1.8 |
| Comp. Ex. 7 | 63.1 | -3.5 |
| Comp. Ex. 8 | 64.0 | -3.6 |
| Comp. Ex. 9 | 54.8 | -5.4 |
| Comp. Ex. 10 | 59.0 | -0.9 |

This document claims priority and contains subject matter related to Japanese Patent Applications Nos. 2006-216717 and 2006-212887, filed on August 9, 2006 and August 4, 2006, respectively.

## Claims

1. An ink-jet ink, comprising:
a pigment;
a dispersant;
a water;
a particulate resin (A) dyed with a fluorescent dye and having an average particle diameter of from 50 to 200 nm; and
an emulsion of a self-emulsifiable polyurethane.

2. A method for preparing an ink-jet ink, comprising:
adding an aqueous emulsion of a self-emulsifiable polyurethane to a pigment dispersion comprising a pigment, a dispersant, and a water, to prepare a first mixture;
agitating the first mixture;
adding a particulate resin (A) dyed with a fluorescent dye and having an average particle diameter of from 50 to 200 nm to the first mixture, to prepare a second mixture;
agitating the second mixture; and
optionally adding an additive selected from the group consisting of a humectant, a surfactant, an antifoaming agent, a smear prevention agent, a pH buffering agent, and an antiseptic agent.

3. An ink-jet ink, obtainable by the method according to Claim 2.

4. The ink-jet ink according to Claim 1 or 3, wherein the ink-jet ink comprises the particulate resin (A) in an amount of from 0.1 to 40.0% by weight on a solid basis.

5. The ink-jet ink according to any one of Claims 1, 3 or 4, wherein the self-emulsifiable polyurethane is anionic.

6. The ink-jet ink according to any one of Claims 1 or 3-5, wherein the ink-jet ink comprises the polyurethane in an amount of from 0.01 to 7% by weight on a solid basis.

7. The ink-jet ink according to any one of Claims 1 or 3-6, wherein the polyurethane has an average particle diameter of not grater than 50 nm.

8. The ink-jet ink according to any one of Claims 1 or 3-7, wherein the pigment has an average particle diameter of from 10 to 200 nm.

9. The ink-jet ink according to any one of Claims 1 or 3-8, wherein the ink-jet ink comprises the pigment in an amount of from 1 to 15% by weight.

10. The ink-jet ink according to any one of Claims 1 or 3-9, wherein the dispersant is a surfactant, and the pigment is dispersed by the surfactant.

11. The ink-jet ink according to Claim 10, wherein the surfactant is a nonionic surfactant.

12. The ink-jet ink according to Claim 11, wherein the nonionic surfactant is a compound having the following formula (I) : 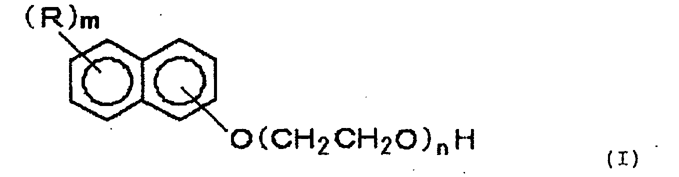 wherein R represents an alkyl, aryl, or an aralkyl group having 1 to 20 carbon atoms, m represents an integer of from 0 to 7, and n represents an integer of from 20 to 200.

13. The ink-jet ink according to Claim 12, wherein the compound is a POE (n=40) β-naphthyl ether.

14. The ink-jet ink according to any one of Claims 1 or 3-13, further comprising an alkanediol.

15. The ink-jet ink according to any one of Claims 1 or 3-14, further comprising an acetylene glycol-based surfactant.

16. An ink-jet ink, comprising:
a particulate resin (A') dyed with a fluorescent dye and having an average particle diameter of from 50 to 130 nm; and
a quinacridone pigment (B) having an average particle diameter of from 50 to 130 nm,
wherein the particulate resin (A') has a color tone selected from the group consisting of yellow, yellow-orange, orange, red-orange, red, pink, cerise, rose, magenta, and a mixture thereof.

17. The ink-jet ink according to Claim 16, wherein the weight ratio (A'/B) of the particulate resin (A') to the quinacridone pigment (B) is from 1/2 to 8/1.

18. The ink-jet ink according to Claim 16 or 17, wherein the particulate resin (A') has a particle diameter distribution such that a standard deviation is not greater than 40 nm.

19. The ink-jet ink according to any one of Claims 16 to 18, wherein the particulate resin (A') has at least one monomer unit selected from the group consisting of styrene, acrylonitrile, acrylic acid, and methacrylic acid.

20. The ink-jet ink according to any one of Claims 16 to 19, wherein the quinacridone pigment (B) is at least one member selected from the group consisting of quinacridone, dimethylquinacridone, and dichloroquinacridone.

21. The ink-jet ink according to any one of Claims 16 to 20, wherein the ink-jet ink comprises the particulate resin (A') and the quinacridone pigment (B) in a total amount of from 5 to 20% by weight.

22. The ink-jet ink according to any one of Claims 16 to 21, wherein the quinacridone pigment (B) is dispersed by a dispersant.

23. The ink-jet ink according to Claim 22, wherein the dispersant is a nonionic surfactant.

24. The ink-jet ink according to Claim 23, wherein the nonionic surfactant is a POE naphthyl ether.

25. The ink-jet ink according to Claim 24, wherein the POE naphthyl ether comprises EO in an amount of from 12 to 60 mol.

26. The ink-jet ink according to Claim 22, wherein the dispersant is an anionic surfactant.

27. The ink-jet ink according to Claim 26, wherein the anionic surfactant is an alkali salt of a POE naphthyl ether phosphate.

28. The ink-jet ink according to Claim 27, wherein the alkali salt of a POE naphthyl ether phosphate comprises EO in an amount of from 5 to 60 mol, and the alkali metal is at least one member selected from the group consisting of Li, Na, and K.

29. The ink-jet ink according to any one of Claims 22 to 28, wherein the weight ratio (B/dispersant) of the quinacridone pigment (B) to the dispersant is from 1/1 to 1/0.1.

30. An ink cartridge, detachably attachable to an image forming apparatus, comprising:
a container; and
the ink-jet ink according to any one of Claims 1 or 3-29 which is contained in the container.

31. The ink cartridge according to Claim 30, wherein the image forming apparatus is an ink-jet printer.

32. An image forming method, comprising:
discharging the ink-jet ink according to any one of Claims 1 or 3-29 from a nozzle of an ink-jet printer to form an image on a recording material.

33. The image forming method according to Claim 32, wherein the ink-jet printer is a piezo ink-jet printer.

34. The image forming method according to Claim 32, wherein the ink-jet printer is a thermal ink-jet printer.

35. An image formed on a recording material with the ink-jet ink according to any one of Claims 1 or 3-29.

36. The image according to claim 35, wherein the recording material is a paper.

## Patentansprüche

1. Tintenstrahltinte, umfassend:
ein Pigment;
ein Dispergiermittel;
Wasser;
ein teilchenförmiges Harz (A), gefärbt mit einem fluoreszierenden Farbstoff und mit einem durchschnittlichen Teilchendurchmesser von 50 bis 200 nm; und
eine Emulsion eines selbstemulgierbaren Polyurethans.

2. Verfahren zur Herstellung einer Tintenstrahltinte, umfassend:
Zusetzen einer wässrigen Emulsion eines selbstemulgierbaren Polyurethans zu einer Pigmentdispersion, welche ein Pigment, ein Dispergiermittel und Wasser umfasst, um eine erste Mischung herzustellen;
Rühren der ersten Mischung;
Zusetzen eines teilchenförmigen Harzes (A), das mit einem fluoreszierenden Farbstoff gefärbt ist und einen durchschnittlichen Teilchendurchmesser von 50 bis 200 nm hat, zu der ersten Mischung, um eine zweite Mischung herzustellen;
Rühren der zweiten Mischung; und
wahlweise Zusetzen eine Additivs, das aus der Gruppe umfassend ein Feuchthaltemittel, ein Tensid, ein Entschäumungsmittel, ein Mittel gegen Verschmierung, einen pH-Puffer und ein Antiseptikum ausgewählt ist.

3. Tintenstrahltinte, erhältlich mit dem Verfahren gemäß Anspruch 2.

4. Tintenstrahltinte gemäß Anspruch 1 oder 3, wobei die Tintenstrahltinte das teilchenförmige Harz (A) in einer Menge von 0,1 bis 40 Gew.-% bezogen auf Feststoff enthält.

5. Tintenstrahltinte gemäß irgendeinem der Ansprüche 1, 3 oder 4, wobei das selbstemulgierbare Polyurethan anionisch ist.

6. Tintenstrahltinte gemäß irgendeinem der Ansprüche 1 oder 3 bis 5, wobei die Tintenstrahltinte das Polyurethan in einer Menge von 0,01 bis 7 Gew.-% bezogen auf Feststoff enthält.

7. Tintenstrahltinte gemäß irgendeinem der Ansprüche 1 oder 3 bis 6, wobei das Polyurethan einen durchschnittlichen Teilchendurchmesser von nicht größer als 50 nm hat.

8. Tintenstrahltinte gemäß irgendeinem der Ansprüche 1 oder 3 bis 7, wobei das Pigment einen durchschnittlichen Teilchendurchmesser von 10 bis 200 nm hat.

9. Tintenstrahltinte gemäß irgendeinem der Ansprüche 1 oder 3 bis 8, wobei die Tintenstrahltinte das Pigment in einer Menge von 1 bis 15 Gew.-% enthält.

10. Tintenstrahltinte gemäß irgendeinem der Ansprüche 1 oder 3 bis 9, wobei das Dispergiermittel ein Tensid ist und das Pigment von dem Tensid dispergiert wird.

11. Tintenstrahltinte gemäß Anspruch 10, wobei das Tensid ein nichtionisches Tensid ist.

12. Tintenstrahltinte gemäß Anspruch 11, wobei das nichtionische Tensid eine Verbindung mit der folgenden Formel (I) ist: 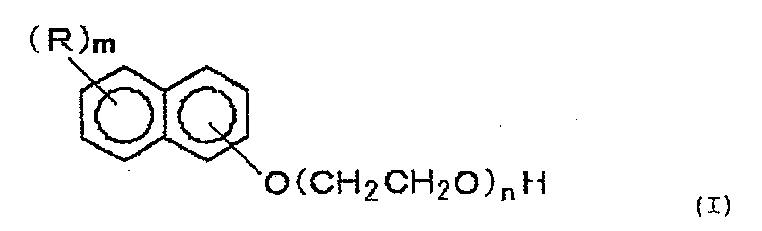 wobei R eine Alkyl-, Aryl- oder Aralkylgruppe mit 1 bis 20 Kohlenstoffatomen darstellt, m eine ganze Zahl von 0 bis 7 darstellt und n eine ganze Zahl von 20 bis 200 ist.

13. Tintenstrahltinte gemäß Anspruch 12, wobei die Verbindung ein POE (n=40)-β-Naphthylether ist.

14. Tintenstrahltinte gemäß irgendeinem der Ansprüche 1 oder 3 bis 13, ferner umfassend ein Alkandiol.

15. Tintenstrahltinte gemäß irgendeinem der Ansprüche 1 oder 3 bis 14, ferner umfassend ein Tensid auf Basis von Acetylenglycol.

16. Tintenstrahltinte, umfassend:
ein teilchenförmiges Harz (A'), gefärbt mit einem fluoreszierenden Farbstoff und mit einem durchschnittlichen Teilchendurchmesser von 50 bis 130 nm; und
ein Chinacridon-Pigment (B) mit einem durchschnittlichen Teilchendurchmesser von 50 bis 130 nm,
wobei das teilchenförmige Harz (A') einen Farbton hat, der aus der Gruppe bestehend aus Gelb, Gelborange, Orange, Rotorange, Rot, Rosa, Kirschrot, Rosarot, Magenta und einer Mischung davon ausgewählt ist.

17. Tintenstrahltinte gemäß Anspruch 16, wobei das Gewichtsverhältnis (A'/B) von dem teilchenförmigen Harz (A') zu dem Chinacridon-Pigment (B) 1/2 bis 8/1 beträgt.

18. Tintenstrahltinte gemäß einem der Ansprüche 16 oder 17, wobei das teilchenförmige Harz (A') eine Teilchendurchmesserverteilung derart hat, dass die Standardabweichung nicht größer als 40 nm ist.

19. Tintenstrahltinte gemäß irgendeinem der Ansprüche 16 bis 18, wobei das teilchenförmige Harz (A') mindestens eine Monomereinheit ausgewählt aus der Gruppe bestehend aus Styrol, Acrylnitril, Acrylsäure und Methacrylsäure aufweist.

20. Tintenstrahltinte gemäß irgendeinem der Ansprüche 16 bis 19, wobei das Chinacridon-Pigment (B) mindestens eines ausgewählt aus der Gruppe bestehend aus Chinacridon, Dimethylchinacridon und Dichlorchinacridon ist.

21. Tintenstrahltinte gemäß irgendeinem der Ansprüche 16 bis 20, wobei die Tintenstrahltinte das teilchenförmige Harz (A') und das Chinacridon-Pigment (B) in einer Gesamtmenge von 5 bis 20 Gew.-% umfasst.

22. Tintenstrahltinte gemäß irgendeinem der Ansprüche 16 bis 21, wobei das Chinacridon-Pigment (B) durch ein Dispergiermittel dispergiert wird.

23. Tintenstrahltinte gemäß Anspruch 22, wobei das Tensid ein nichtionisches Tensid ist.

24. Tintenstrahltinte gemäß Anspruch 23, wobei das Tensid ein POE-Naphthylether ist.

25. Tintenstrahltinte gemäß Anspruch 24, wobei der POE-Naphthylether EO (Ethylenoxid) in einer Menge von 12 bis 60 Mol enthält.

26. Tintenstrahltinte gemäß Anspruch 22, wobei das Dispergiermittel ein anionisches Tensid ist.

27. Tintenstrahltinte gemäß Anspruch 26, wobei das anionische Tensid ein Alkalisalz von einem POE-Naphthyletherphosphat ist.

28. Tintenstrahltinte gemäß Anspruch 27, wobei das Alkalisalz von einem POE-Naphthyletherphosphat EO (Ethylenoxid) in einer Menge von 5 bis 60 Mol enthält und das Alkalimetall mindestens eines ausgewählt aus der Gruppe bestehend aus Li, Na und K ist.

29. Tintenstrahltinte gemäß irgendeinem der Ansprüche 22 bis 28, wobei das Gewichtsverhältnis (B/Dispergiermittel) von dem Chinacridonpigment (B) zu dem Dispergiermittel 1/1 bis 1/0,1 beträgt.

30. Tintenkartusche, lösbar anbringbar an einer Bilderzeugungsvorrichtung, umfassend:
einen Behälter; und
die Tintenstrahltinte gemäß irgendeinem der Ansprüche 1 oder 3 bis 29, welche in dem Behälter enthalten ist.

31. Tintenkartusche gemäß Anspruch 30, wobei die Bilderzeugungsvorrichtung ein Tintenstrahldrucker ist.

32. Bilderzeugungsverfahren, umfassend:
Freisetzen der Tintenstrahltinte gemäß irgendeinem der Ansprüche 1 oder 3 bis 29 aus einer Düse eines Tintenstrahldruckers, um ein Bild auf einem Aufzeichnungsmaterial zu erzeugen.

33. Bilderzeugungsverfahren gemäß Anspruch 32, wobei der Tintenstrahldrucker ein Piezo-Tintenstrahldrucker ist.

34. Bilderzeugungsverfahren gemäß Anspruch 32, wobei der Tintenstrahldrucker ein Thermo-Tintenstrahldrucker ist.

35. Bild, erzeugt auf einem Aufzeichnungsmaterial mit der Tintenstrahltinte gemäß irgendeinem der Ansprüche 1 oder 3 bis 29.

36. Bild gemäß Anspruch 35, wobei das Aufzeichnungsmaterial ein Papier ist.

## Revendications

1. Encre pour jet d'encre comprenant :
un pigment ;
un dispersant ;
de l'eau ;
une résine particulaire (A) colorée avec un colorant fluorescent et ayant un diamètre de particule moyen de 50 à 200 nm ; et
une émulsion d'un polyuréthane auto-émulsifiable.

2. Procédé pour préparer une encre pour jet d'encre comprenant :
l'addition d'une émulsion aqueuse d'un polyuréthane auto-émulsifiable à une dispersion de pigment comprenant un pigment, un dispersant et de l'eau, pour préparer un premier mélange ;
l'agitation du premier mélange ;
l'addition d'une résine particulaire (A) colorée avec un colorant fluorescent et ayant un diamètre de particule moyen de 50 à 200 nm au premier mélange pour préparer un second mélange ;
l'agitation du second mélange ; et
éventuellement l'addition d'un additif choisi dans le groupe consistant en un humectant, un tensioactif, un agent antimousse, un agent antisalissure, un agent tampon de pH et un agent antiseptique.

3. Encre pour jet d'encre pouvant être obtenue par le procédé selon la revendication 2.

4. Encre pour jet d'encre selon la revendication 1 ou 3 où l'encre pour jet d'encre comprend la résine particulaire (A) en une quantité de 0,1 à 40,0 % en poids sur une base solide.

5. Encre pour jet d'encre selon l'une quelconque des revendications 1, 3 ou 4 où le polyuréthane auto-émulsifiable est anionique.

6. Encre pour jet d'encre selon l'une quelconque des revendications 1 ou 3-5 où l'encre pour jet d'encre comprend le polyuréthane en une quantité de 0,01 à 7 % en poids sur une base solide.

7. Encre pour jet d'encre selon l'une quelconque des revendications 1 ou 3-6 où le polyuréthane a un diamètre de particule moyen qui n'est pas supérieur à 50 nm.

8. Encre pour jet d'encre selon l'une quelconque des revendications 1 ou 3-7 où le pigment a un diamètre de particule moyen de 10 à 200 nm.

9. Encre pour jet d'encre selon l'une quelconque des revendications 1 ou 3-8 où l'encre pour jet d'encre comprend le pigment en une quantité de 1 à 15 % en poids.

10. Encre pour jet d'encre selon l'une quelconque des revendications 1 ou 3-9 où le dispersant est un tensioactif et le pigment est dispersé par le tensioactif.

11. Encre pour jet d'encre selon la revendication 10 où le tensioactif est un tensioactif non ionique.

12. Encre pour jet d'encre selon la revendication 11 où le tensioactif non ionique est un composé ayant la formule (1) suivante : 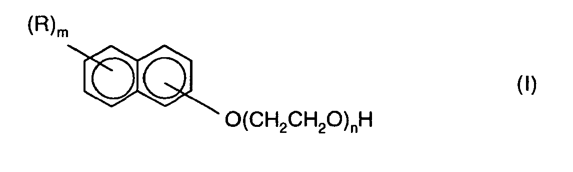 où R représente un groupe alkyle, aryle ou aralkyle ayant 1 à 20 atomes de carbone, m représente un entier de 0 à 7 et n représente un entier de 20 à 200.

13. Encre pour jet d'encre selon la revendication 12 où le composé est un POE (n=40) β-naphtyléther.

14. Encre pour jet d'encre selon l'une quelconque des revendications 1 ou 3-13 comprenant en outre un alcanediol.

15. Encre pour jet d'encre selon l'une quelconque des revendications 1 ou 3-14 comprenant en outre un tensioactif à base d'acéthylèneglycol.

16. Encre pour jet d'encre comprenant :
une résine particulaire (A') colorée avec un colorant fluorescent et ayant un diamètre de particule moyen de 50 à 130 nm ; et
un pigment de quinacridone (B) ayant un diamètre de particule moyen de 50 à 130 nm,
où la résine particulaire (A') a une teinte choisie dans le groupe consistant en jaune, jaune-orange, orange, rouge-orange, rouge, saumon, cerise, rose, magenta et un mélange de celles-ci.

17. Encre pour jet d'encre selon la revendication 16 où le rapport en poids (A'/B) de la résine particulaire (A') au pigment de quinacridone (B) est de 1/2 à 8/1.

18. Encre pour jet d'encre selon la revendication 16 ou 17 où la résine particulaire (A') a une distribution des diamètres de particule telle que l'écart type n'est pas supérieur à 40 nm.

19. Encre pour jet d'encre selon l'une quelconque des revendications 16 à 18 où la résine particulaire (A') a au moins une unité monomère choisie dans le groupe consistant en le styrène, l'acrylonitrile, l'acide acrylique et l'acide méthacrylique.

20. Encre pour jet d'encre selon l'une quelconque des revendications 16 à 19 où le pigment de quinacridone (B) est au moins un membre choisi dans le groupe consistant en la quinacridone, la diméthylquinacridone et la dichloroquinacridone.

21. Encre pour jet d'encre selon l'une quelconque des revendications 16 à 20 où l'encre pour jet d'encre comprend la résine particulaire (A') et le pigment de quinacridone (B) en une quantité totale de 5 à 20 % en poids.

22. Encre pour jet d'encre selon l'une quelconque des revendications 16 à 21 où le pigment de quinacridone (B) est dispersé par un dispersant.

23. Encre pour jet d'encre selon la revendication 22 où le dispersant est un tensioactif non ionique.

24. Encre pour jet d'encre selon la revendication 23 où le tensioactif non ionique est un POE naphtyléther.

25. Encre pour jet d'encre selon la revendication 24 où le POE naphtyléther comprend OE en une quantité de 12 à 60 mol.

26. Encre pour jet d'encre selon la revendication 22 où le dispersant est un tensioactif anionique.

27. Encre pour jet d'encre selon la revendication 26 où le tensioactif anionique est un sel alcalin d'un POE naphtyléther phosphate.

28. Encre pour jet d'encre selon la revendication 27 où le sel alcalin d'un POE naphtyléther phosphate comprend OE en une quantité de 5 à 60 mol, et le métal alcalin est au moins un membre choisi dans le groupe consistant en Li, Na et K.

29. Encre pour jet d'encre selon l'une quelconque des revendications 22 à 28 où le rapport en poids (B/dispersant) du pigment de quinacridone (B) au dispersant est de 1/1 à 1/0,1.

30. Cartouche d'encre pouvant être fixée de manière amovible à un appareil de formation d'images comprenant :
un récipient ; et
l'encre pour jet d'encre selon l'une quelconque des revendications 1 ou 3-29 qui est contenue dans le récipient.

31. Cartouche d'encre selon la revendication 30 où l'appareil de formation d'images est une imprimante à jet d'encre.

32. Procédé de formation d'images comprenant :
l'évacuation de l'encre pour jet d'encre selon l'une quelconque des revendications 1 ou 3-29 depuis une buse d'une imprimante à jet d'encre pour former une image sur un matériau d'enregistrement.

33. Procédé de formation d'images selon la revendication 32 où l'imprimante à jet d'encre est une imprimante à jet d'encre piézoélectrique.

34. Procédé de formation d'images selon la revendication 32 où l'imprimante à jet d'encre est une imprimante à jet d'encre thermique.

35. Image formée sur un matériau d'enregistrement avec l'encre pour jet d'encre selon l'une quelconque des revendications 1 ou 3-29.

36. Image selon la revendication 35 où le matériau d'enregistrement est un papier.
